# FASCICULE DE BREVET EUROPEEN

(11) **EP 3 963 286 B1**
(45) Date de publication et mention de la délivrance du brevet: **01.05.2024**
(21) Numéro de dépôt: 20719484.6
(22) Date de dépôt: 23.04.2020
(51) Int. Cl.: G01S 19/14, G01C 21/16, G01C 25/00, G01S 19/47

(54) **PROCÉDÉ DE NAVIGATION À DOUBLE FILTRE**
VERFAHREN ZUR DOPPELT GEFILTERTEN NAVIGATION
DOUBLY FILTERED NAVIGATION METHOD

(30) Priorité: 03.05.2019 FR 1904691
(43) Date de publication de la demande: 09.03.2022
(73) Titulaire: Safran Electronics & Defense, 75015 Paris (FR)
(72) Inventeur: BECHERET, Yves, 77550 Moissy-Cramayel (FR)
(74) Mandataire: Cabinet Boettcher
(86) Numéro de dépôt international: PCT/EP2020/061392
(87) Numéro de publication internationale: WO 2020/224984

(56) Documents cités:
- EP-A2- 2 172 744
- US-A1- 2001 020 216

## Description

La présente invention concerne le domaine de la mesure inertielle plus particulièrement aux fins de navigation.

### Arrière-plan technologique

La navigation d'un véhicule est habituellement réalisée au moyen d'un algorithme de navigation agencé pour déterminer des informations de localisation et d'orientation spatiales (informations de position, vitesse, attitude) et des limites de protection en position horizontale et verticale à partir, d'une part, de mesures inertielles provenant d'un circuit de traitement des signaux d'une unité de mesure inertielle et, d'autre part, de mesures de pseudo-distance déterminées à partir de la réception de signaux satellitaires de positionnement et, éventuellement, d'altitude ou de profondeur barométrique. L'unité de mesure inertielle comporte classiquement des accéléromètres disposés selon les axes d'un repère de mesure et des gyromètres agencés pour mesurer les rotations du repère de mesure par rapport à un repère inertiel.

A eux seuls, les signaux provenant de l'unité de mesure inertielle permettent d'entretenir les informations spatiales que sont la position, la vitesse, et l'attitude du véhicule. La navigation à partir des informations spatiales purement inertielles est précise à relativement court terme mais tend à dériver à relativement long terme.

Les mesures de pseudo-distance permettent à elles seules de déterminer les informations spatiales que sont la position et la vitesse du véhicule ou, plus précisément, de son antenne de réception. Comme la navigation à partir des informations spatiales purement satellitaires est précise à relativement long terme, l'algorithme de navigation comprend généralement un filtre de Kalman agencé pour exploiter à la fois les signaux de l'unité de mesure inertielle et les mesures de pseudo-distance (on parle couramment d'hybridation). Le plus souvent, le filtre de Kalman estime certaines erreurs des capteurs inertiels de l'unité de mesure inertielle (ou « UMI ») afin d'améliorer la précision de navigation plus particulièrement en cabotage ou « coasting ». A partir de l'estimée de ces erreurs, le filtre de Kalman détermine une valeur d'auto-calibration utilisée pour ajuster une entrée de calibration du circuit de traitement des signaux de l'unité de mesure inertielle afin de réduire l'influence d'une erreur de l'unité de mesure inertielle sur les informations spatiales fournies par l'algorithme de navigation.

Il en résulte un procédé de navigation relativement précis sauf lorsque l'un des satellites dont le signal a été utilisé est défaillant. En effet, dans ce cas, le filtre de Kalman produit une valeur d'auto-calibration erronée qui va dégrader la précision de la navigation au lieu de l'améliorer.

Le document EP 2 172 744 utilise une alternative pour déterminer si le vol est nominal dans le sens d'une comparaison de l'estimation de l'erreur avec l'estimation des erreurs des trajets précédents mais ne considère pas le suivit d'une condition d'utilisation du véhicule.

### Objet de l'invention

Un but de l'invention est de fournir un moyen pour améliorer la précision des navigations hybrides qui reste indépendant de celles-ci.

### Bref exposé de l'invention

A cet effet, on prévoit, selon l'invention, un procédé de navigation d'un véhicule au moyen d'un algorithme de navigation agencé pour déterminer des informations spatiales à partir, d'une part, de mesures inertielles provenant d'un circuit de traitement des signaux d'une unité de mesure inertielle et, d'autre part, de mesures de pseudo-distance déterminées à partir de la réception de signaux satellitaires de positionnement, le circuit de traitement des signaux ayant une entrée de calibration ajustable sur une valeur d'auto-calibration afin de réduire l'influence d'une erreur de l'unité de mesure inertielle sur les informations spatiales fournies par l'algorithme de navigation.

L'algorithme de navigation met en œuvre un jeu de filtres qui sont des filtres de Kalman-Schmidt agencés pour détecter des mesures défaillantes parmi les mesures de pseudo-distance transmises au jeu de filtres et les écarter de la détermination des informations spatiales.

Le procédé comprend les étapes de :
- lors de l'accomplissement d'un trajet :
   - transmettre les mesures inertielles et les mesures de pseudo-distance à un filtre de navigation hybride dédié à l'auto-calibration qui utilise un filtre de Kalman paramétré pour fournir au moins une estimée d'au moins un terme d'erreur affectant l'unité de mesure inertielle et une covariance associée à ladite estimée ;
   - transmettre chaque estimée et la covariance associée à un algorithme de consolidation programmé pour comparer la covariance à un premier seuil de covariance et mémoriser l'estimée si la covariance est inférieure au premier seuil de covariance ;
   - enregistrer au moins un paramètre représentatif d'une condition d'utilisation du véhicule ;
- après l'accomplissement du trajet :
   . faire vérifier par l'algorithme de consolidation que la condition d'utilisation est nominale et, le cas échéant, mettre à jour la valeur d'auto-calibration au moyen de l'estimée de l'erreur de l'unité de mesure inertielle ;
   . calibrer l'unité de mesure inertielle en utilisant la valeur d'auto-calibration mise à jour.

Ainsi, les estimées des erreurs ne sont prises en compte dans la détermination de la valeur d'auto-calibration que si les covariances qui leur sont associées sont inférieures à un seuil. Ceci limite le risque que la prise en compte de mesures provenant d'un capteur défaillant ne vienne fausser la détermination de la valeur d'auto-calibration. De plus, l'auto-calibration étant effectuée pour le trajet qui va suivre celui au cours duquel l'estimée de l'erreur a été déterminée, il importe de s'assurer que ce dernier trajet s'est déroulé nominalement et que l'estimée de l'erreur utilisée pour la détermination de la valeur d'auto-calibration est représentative des conditions d'utilisation pour le futur trajet.

Avantageusement, les mesures identifiées comme défaillantes sont exclues des mesures transmises au filtre de navigation hybride.

Ceci permet d'améliorer encore la fiabilité de la détermination de la valeur d'auto-calibration. Avantageusement encore, seule une portion de l'estimée, de préférence un vingtième environ, est utilisée pour mettre à jour la valeur d'auto-calibration.

Même dans l'hypothèse où une mesure défaillante et/ou une mesure influencée par des conditions non nominales d'utilisation aurait été prise en compte pour l'estimée des erreurs des capteurs, l'influence de cette mesure sur l'auto-calibration est affaiblie du fait qu'une portion seulement de l'estimée de l'erreur est utilisée.

Selon une première caractéristique avantageuse, si l'estimée de l'erreur est supérieure à un premier seuil d'erreur, l'estimée de l'erreur est fixée à la valeur du premier seuil d'erreur pour la mise à jour de la valeur d'auto-calibration.

La valeur du premier seuil d'erreur peut être déterminée pour correspondre à l'estimée maximale de l'erreur en conditions nominales (déterminée empiriquement ou par simulations et fixée en usine). Si l'estimée de l'erreur est supérieure à ce premier seuil, il est possible qu'une mesure défaillante ait été prise en compte. Pour en limiter l'influence, on utilise la valeur du premier seuil d'erreur comme estimée de l'erreur dans la détermination de la valeur d'auto-calibration mise-à-jour.

Selon une deuxième caractéristique avantageuse, en combinaison ou pas avec la première précitée, si l'estimée de l'erreur est supérieure à un deuxième seuil d'erreur supérieure au premier seuil d'erreur, l'estimée de l'erreur n'est pas utilisée pour la mise à jour de la valeur d'auto-calibration.

La valeur du deuxième seuil d'erreur peut être déterminée pour correspondre à l'estimée maximale de l'erreur qu'il est possible d'avoir quelles que soient les conditions d'utilisation (déterminée empiriquement ou par simulations et fixée en usine). Si l'estimée de l'erreur est supérieure à ce deuxième seuil, il est très probable qu'une mesure défaillante a été prise en compte. L'estimée de l'erreur ne sera alors pas utilisée pour la détermination de la valeur d'auto-calibration mise-à-jour.

En application à un aéronef, les informations spatiales comprennent des informations de position, vitesse, attitude, une limite de protection et l'indication d'éventuelles pannes détectées.

Il y a, entre la position déterminée par l'algorithme de navigation et la position réelle de l'aéronef, un décalage qui dépend des erreurs des capteurs et des satellites. Pour autoriser certaines phases de vol à partir des informations de navigation, vol dans une gorge ou à basse altitude en phase d'atterrissage par exemple, il est d'usage de déterminer une zone dite de protection (peut-être une zone sphérique, un disque horizontal ou un zone verticale) qui est centrée sur la position déterminée par l'algorithme et dans laquelle la position réelle se trouve avec une probabilité prédéterminée. La limite de protection correspond à un rayon de la zone de protection.

De préférence, les mesures de pseudo-distance ne sont transmises au filtre de navigation hybride que si la vitesse du véhicule est supérieure à un seuil de vitesse prédéterminée.

Les mesures de pseudo-distance, qui sont peu fiables lorsque l'aéronef est au sol en raison de l'existence des réflexions des signaux satellitaires sur les bâtiments ou appareils à proximité (ou multi-trajets) ne sont alors pas exploitées pour l'auto-calibration.

De préférence, les mesures de pseudo-distance ne sont exploitées par le filtre de navigation hybride dédié à l'auto-calibration que si celles-ci sont validées par une fonction de contrôle, par exemple de type RAIM (Receiver Autonomous Integrity Monitoring) ou surveillance d'intégrité autonome du récepteur, réalisée par le récepteur de radiolocalisation.

De préférence, une information de pression atmosphérique ou d'altitude pression est également transmise à la première banque de filtres et au filtre de navigation hybride dédié à l'auto-calibration.

Cette information de pression barométrique est exploitée par les filtres pour renforcer la détermination de l'altitude de l'aéronef notamment lorsque les informations de pseudo-distance ne sont pas exploitables. Avantageusement, la condition d'utilisation des erreurs estimées par le filtre de navigation hybride dédié à l'auto-calibration est représentée par l'un au moins des paramètres suivants : un temps de trajet, une survenance de panne, une disponibilité des signaux satellitaires, une vitesse, une température...

La vérification que ces paramètres restent dans un domaine acceptable permet de déterminer si le trajet s'est déroulé nominalement et donc de déterminer si l'estimée des termes erreurs évalués par le filtre dédié à l'auto-calibration est représentative de conditions usuelles d'utilisation.

L'invention a également pour objet un dispositif de navigation pour véhicule, comprenant une unité de mesure inertielle et un récepteur de signaux satellitaires de positionnement tous deux reliés à une unité informatique de traitement mettant en œuvre un algorithme de navigation agencé pour déterminer des informations spatiales à partir, d'une part, de mesures inertielles provenant d'un circuit de traitement des signaux de l'unité de mesure inertielle et, d'autre part, de mesures de pseudo-distance provenant du récepteur de signaux satellitaires de positionnement, le circuit de traitement des mesures ayant une entrée de calibration ajustable sur une valeur d'auto-calibration afin de réduire l'influence d'une erreur de l'unité de mesure inertielle sur les informations spatiales fournies par l'algorithme de navigation. L'algorithme de navigation met en œuvre un premier jeu de filtres qui comprend des filtres de Kalman-Schmidt et l'unité informatique de traitement est agencée pour mettre en œuvre le procédé selon l'invention.

D'autres caractéristiques et avantages de l'invention ressortiront à la lecture de la description qui suit d'un mode de réalisation particulier et non limitatif de l'invention.

### Brève description des dessins

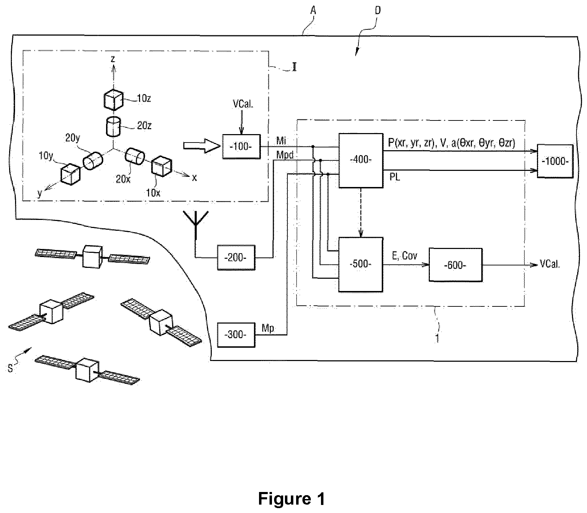

Il sera fait référence à la figure unique annexée représentant schématiquement un dispositif pour la mise en œuvre du procédé selon l'invention.

### Description détaillée de l'invention

En référence à la figure, le procédé est ici décrit en application à la navigation d'un aéronef, ici symbolisé en A, embarquant un dispositif de navigation, généralement désigné en D, exploitant, d'une part, des signaux inertiels et, d'autre part, des signaux de positionnement provenant d'une constellation de satellites S. Le dispositif D mêle un système de positionnement inertiel et un système de positionnement par satellites. Le système de positionnement inertiel est connu en lui-même et seules les particularités de sa structure et de son fonctionnement qui sont utiles à la description de l'invention seront ici présentées. Les systèmes de positionnement par satellites (ou GNSS de l'anglais « Global Navigation Satellite System ») sont connus en eux-mêmes sous différentes appellations comme GPS, GALILEO, GLONASS, BEIDOU et seules les particularités de sa structure et de son fonctionnement qui sont utiles à la description de l'invention seront ici présentées.

Le dispositif D comprend une unité de mesure inertielle I, un récepteur 200 de signaux satellitaires de positionnement et un organe de mesure de pression atmosphérique 300 tous trois reliés à une unité informatique de traitement généralement désignée en 1. L'unité de mesure inertielle I comprend de manière classique des capteurs inertiels linéaires 10x, 10y et 10z, ici des accéléromètres, ayant des axes sensibles positionnés selon les axes x, y, z d'un repère de mesure, et des capteurs inertiels angulaires 20x, 20y et 20z, ici des gyromètres positionnés selon les axes x, y, z. Les sorties des capteurs inertiels 10x, 10y, 10z, 20x, 20y, 20z sont reliées à un circuit de traitement 100 comprenant au moins un processeur et une mémoire contenant un premier programme agencé, de façon connue en elle-même, pour déterminer, à partir des signaux fournis par les capteurs inertiels 10x, 10y, 10z, 20x, 20y, 20z, des mesures inertielles Mi comprenant des composantes selon les axes x, y, z d'un vecteur force spécifique et des rotations du repère de mesure par rapport à un repère de référence ayant des axes xr, yr, zr. Le circuit de traitement 100 a une entrée de calibration ajustable sur une valeur d'auto-calibration VCal prise en compte par le premier programme afin de réduire l'influence d'une erreur des capteurs inertiels sur les mesures inertielles.

Le récepteur 200 comprend au moins un processeur et une mémoire contenant un deuxième programme agencé, de façon connue en elle-même, pour calculer des mesures de pseudo-distance Mpd à partir de signaux satellitaires de positionnement qui sont émis par les satellites de la constellation de satellites S.

L'organe de mesure de pression 300 est agencé pour déterminer une mesure Mp de la pression atmosphérique à l'extérieur de l'aéronef A. L'organe de mesure de pression 300 est connu en lui-même et ne sera pas décrit ici.

L'unité informatique de traitement 1 comprend au moins un processeur et une mémoire contenant un troisième programme agencé pour exécuter un algorithme de navigation agencé pour déterminer des informations spatiales à partir, d'une part, des mesures inertielles provenant du circuit de traitement 100 et, d'autre part, des mesures de pseudo-distance déterminées par le récepteur 200 à partir des signaux satellitaires de positionnement.

L'algorithme de navigation met en œuvre au moins un premier filtre 400 et un deuxième filtre 500 qui reçoivent tous deux en entrée les mesures inertielles Mi, les mesures de pseudo-distance Mpd et la mesure de pression Mp.

Le premier filtre 400 est un filtre de Kalman-Schmidt paramétré pour :
- modéliser des erreurs dans les mesures qui lui sont fournies sans les estimer ;
- détecter des mesures défaillantes parmi les mesures qui lui ont été transmises ;
- déterminer des informations spatiales à partir des mesures considérées comme non défaillantes.

Les informations spatiales comprennent des informations de position p(xr, yr, zr), vitesse v, attitude a(θxr, θyr, θzr) et une limite de protection PL et sont transmises à une unité de pilotage 1000 de l'aéronef A à laquelle le dispositif D est relié.

Plus précisément, le premier filtre 400 est une banque de filtres de Kalman-Schmidt : un des filtres de Kalman-Schmidt exploite toutes les mesures et les autres des filtres de Kalman-Schmidt exploitent chacun toutes les mesures sauf une, chaque filtre étant agencé pour fournir des informations spatiales à partir des mesures qu'il reçoit en entrée. L'algorithme de navigation est agencé pour comparer les informations spatiales fournies par les filtres de Kalman-Schmidt. Grossièrement, mais ceci est connu de l'homme du métier :
- en l'absence de mesure défaillante, les informations spatiales fournies par les filtres de Kalman-Schmidt sont sensiblement identiques les unes aux autres ;
- lorsque l'une des mesures est défaillante, les informations spaciales fournies par le filtre excluant ladite mesure diffèrent des informations de localisation fournies par les autres filtres, ce qui permet d'identifier la mesure défaillante.

Le deuxième filtre 500 est un filtre de navigation hybride et plus particulièrement un filtre de Kalman paramétré pour déterminer de façon connue en elle-même au moins une estimée E d'au moins un terme d'erreur affectant l'unité de mesure inertielle I et une covariance Cov associée à ladite estimée.

Le troisième programme comprend des instructions agencées pour mettre en œuvre le procédé de l'invention qui comprend, lors de l'accomplissement d'un trajet par l'aéronef A, les étapes de :
- transmettre les mesures inertielles Mi, les mesures de pseudo-distance Mpd et la mesure de pression Mp au premier filtre 400 pour déterminer les informations spatiales à partir des mesures identifiées comme non défaillantes ;
- transmettre les mesures inertielles Mi, les mesures de pseudo-distance Mpd et la mesure de pression atmosphérique Mp au deuxième filtre 500 pour déterminer au moins une estimée E de l'erreur affectant l'unité de mesure inertielle I et la covariance Cov associée à ladite estimée E ;
- transmettre chaque estimée et la covariance associée à un algorithme de consolidation 600 programmé pour comparer la covariance à un premier seuil de covariance et mémoriser l'estimée si la covariance est inférieure au premier seuil de covariance s1 ;
- enregistrer au moins un paramètre représentatif d'une condition d'utilisation de l'aéronef A.

Dans le mode de mise en œuvre préféré, les mesures identifiées comme défaillantes par le premier filtre 400 sont exclues des mesures exploitées par le deuxième filtre 500. On a ici schématiquement représenté en trait pointillé un lien entre le premier filtre 400 et le deuxième filtre 500 permettant la transmission au deuxième filtre 500 d'une indication des mesures défaillantes.

En outre, les mesures de pseudo-distance Mpd ne sont transmises au deuxième filtre 500 que si la vitesse de l'aéronef A est supérieure à un seuil de vitesse prédéterminée correspondant ici à la vitesse de décollage de l'aéronef A. Comme la précision des mesures de pseudo-distance Mpd est plus faible au sol, on a choisi de ne pas en tenir compte pour estimer les erreurs tant que l'aéronef A n'a pas décollé. En variante, on pourrait surveiller un autre paramètre pour décider du début de la prise en compte des mesures de pseudo-distance, comme l'altitude, un angle d'incidence ou la pression atmosphérique, ou une combinaison de ceux-ci.

La valeur du premier seuil de covariance s1 est prédéterminée pour correspondre à une fiabilité minimale souhaitée de l'estimation d'erreur.

La condition d'utilisation est représentée par l'un au moins des paramètres suivants : un temps de trajet, une survenance de panne, une disponibilité des signaux satellitaires, une vitesse, une température... Les paramètres comme le temps de trajet, la disponibilité des signaux satellitaires, la vitesse peuvent être déterminés directement au sein du dispositif D. Il est envisageable que d'autres paramètres, comme la survenance de panne, soient fournis à l'unité de traitement 1 par des capteurs de l'aéronef A et/ou par l'unité de pilotage 1000 auxquels le dispositif D est relié.

Le procédé de l'invention comprend en outre, après l'accomplissement du trajet par l'aéronef A, les étapes de :
- faire vérifier par l'algorithme de consolidation 600 que la condition d'utilisation est nominale et, le cas échéant, calculer une valeur d'auto-calibration VCal mise à jour par l'algorithme de consolidation 600 au moyen de l'estimée E de l'erreur de l'unité de mesure inertielle I ;
- faire calibrer l'unité de mesure inertielle I par le circuit de traitement 100 en utilisant la valeur d'auto-calibration VCal mise à jour.

Dans le mode de mise en œuvre préféré, seule une portion de l'estimée E est utilisée pour mettre à jour la valeur d'auto-calibration VCal. Plus précisément ici, environ un vingtième de l'estimée E est utilisé pour mettre à jour la valeur d'auto-calibration VCal.

En outre, si l'estimée E de l'erreur est supérieure à un premier seuil d'erreur s2, l'estimée E de l'erreur est remplacée par la valeur du premier seuil d'erreur s2 pour la mise à jour de la valeur d'auto-calibration VCal. Ainsi, dans ce cas, c'est un vingtième de la valeur du premier seuil d'erreur s2 qui sera utilisé pour le calcul de la valeur d'auto-calibration VCal mise à jour. La valeur du premier seuil d'erreur s2 peut être déterminée pour correspondre à l'estimée maximale de l'erreur en conditions nominales (déterminée empiriquement et fixée en usine).

Toutefois, si l'estimée E de l'erreur est supérieure à un deuxième seuil d'erreur s3 supérieur au premier seuil d'erreur s2, l'estimée E de l'erreur n'est pas utilisée pour la mise à jour de la valeur d'auto-calibration VCal. Dans ce cas, on comprend que la valeur d'auto-calibration VCal est laissée inchangée, l'estimation d'erreur étant considérée comme non fiable.

Bien entendu, l'invention n'est pas limitée au mode de réalisation décrit mais englobe toute variante entrant dans le champ de l'invention telle que définie par les revendications.

En particulier, le dispositif peut avoir toute structure permettant la mise en œuvre du procédé de l'invention. Ainsi, le circuit de traitement des signaux provenant des capteurs inertiels peut être intégré dans l'unité inertielle ou être intégré à l'unité de traitement 1. Le calcul des mesures de pseudo-distance à partir des signaux satellitaires peut être réalisé dans le récepteur de signaux satellitaires ou directement par l'unité de traitement 1.

Le dispositif peut comprendre une architecture à base de processeurs et de mémoires de type classique et/ou sous forme de circuit logique programmable ou FPGA.

La structure logicielle de l'invention peut être différente de celle décrite et, par exemple, ne comprendre qu'un unique programme ou un programme maître appelant des programmes esclaves.

Il est possible de se passer de la mesure de pression atmosphérique.

Le recours à des seuils d'erreur est avantageux mais est facultatif.

Les mesures identifiées comme défaillantes par le premier filtre 400 peuvent ne pas être exclues des mesures exploitées par le deuxième filtre 500.

## Revendications

1. Procédé de navigation d'un véhicule (A) au moyen d'un algorithme de navigation agencé pour déterminer des informations spatiales (p(xr, yr, zr), v, a(θxr, θyr, θzr), PL) à partir, d'une part, de mesures inertielles (Mi) provenant d'un circuit de traitement (100) des signaux d'une unité de mesure inertielle (I) et, d'autre part, de mesures de pseudo-distance (Mpd) déterminées à partir de la réception de signaux satellitaires de positionnement, le circuit de traitement (100) des signaux ayant une entrée de calibration ajustable sur une valeur d'auto-calibration (VCal) afin de réduire l'influence d'une erreur de l'unité de mesure inertielle (I) sur les informations spatiales (p(xr, yr, zr), v, a(θxr, θyr, θzr), PL) fournies par l'algorithme de navigation, **caractérisé en ce que** l'algorithme de navigation met en oeuvre au moins un jeu de filtres (400) qui sont des filtres de Kalman-Schmidt agencé pour détecter des mesures défaillantes parmi les mesures transmises au jeu de filtres (400) et les écarter de la détermination des informations spatiales (p(xr, yr, zr), v, a(θxr, θyr, θzr), PL) et **en ce que** le procédé comprend les étapes de :
- lors de l'accomplissement d'un trajet :
. transmettre les mesures inertielles (Mi) et les mesures de pseudo-distance (Mpd) à au moins un filtre (500) de navigation hybride qui est un filtre de Kalman paramétré pour fournir au moins une estimée (E) d'au moins un terme d'erreur affectant l'unité de mesure inertielle (I) et une covariance (Cov) associée à ladite estimée (E) ;
. transmettre chaque estimée (E) et la covariance (Cov) associée à un algorithme de consolidation (600) programmé pour comparer la covariance (Cov) à un premier seuil de covariance (s1) et mémoriser l'estimée (E) si la covariance (Cov) est inférieure au premier seuil de covariance (s1) ;
. enregistrer au moins un paramètre représentatif d'une condition d'utilisation du véhicule (A) ;
- après l'accomplissement du trajet :
. faire vérifier par l'algorithme de consolidation (600) que la condition d'utilisation est nominale et, le cas échéant, mettre à jour la valeur d'auto-calibration (VCal) au moyen de l'estimée (E) de l'erreur de l'unité de mesure inertielle (I) ;
. calibrer l'unité de mesure inertielle (I) en utilisant la valeur d'auto-calibration (VCal) mise à jour.

2. Procédé selon la revendication 1, dans lequel les mesures identifiées comme défaillantes sont exclues des mesures utilisées par le filtre (500) de navigation hybride.

3. Procédé selon la revendication 1 ou la revendication 2, dans lequel seule une portion de l'estimée (E) est utilisée pour mettre à jour la valeur d'auto-calibration (VCal).

4. Procédé selon la revendication 3, dans lequel un vingtième de l'estimée (E) environ est utilisé pour mettre à jour la valeur d'auto-calibration (VCal).

5. Procédé selon l'une quelconque des revendications précédentes, dans lequel si l'estimée (E) de l'erreur est supérieure à un premier seuil d'erreur, l'estimée (E) de l'erreur est remplacée par le premier seuil d'erreur pour la mise à jour de la valeur d'auto-calibration (VCal).

6. Procédé selon la revendication 5, dans lequel si l'estimée (E) de l'erreur est supérieure à un deuxième seuil d'erreur supérieure au premier seuil d'erreur, l'estimée (E) de l'erreur n'est pas utilisée pour la mise à jour de la valeur d'auto-calibration (VCal).

7. Procédé selon l'une quelconque des revendications précédentes, dans lequel le véhicule (A) est un aéronef et les informations spatiales (p(xr, yr, zr), v, a(θxr, θyr, θzr), PL) comprennent des informations de position, vitesse, attitude et une limite de protection.

8. Procédé selon la revendication 7, dans lequel les mesures de pseudo-distance (Mpd) ne sont transmises au filtre (500) de navigation hybride que si la vitesse du véhicule (A) est supérieure à un seuil de vitesse prédéterminé (s4).

9. Procédé selon l'une quelconque des revendications 7 et 8, dans lequel une information de pression atmosphérique est également transmise au jeu de filtres (400) et au filtre (500) de navigation hybride.

10. Procédé selon l'une quelconque des revendications précédentes, dans lequel la condition d'utilisation est représentée par l'un au moins des paramètres suivants : un temps de trajet, une survenance de panne, une disponibilité des signaux satellitaires, une vitesse, une température.

11. Dispositif de navigation pour véhicule (A), comprenant une unité de mesure inertielle (I) et un récepteur (200) de signaux satellitaires de positionnement tous deux reliés à une unité informatique de traitement (1) mettant en oeuvre un algorithme de navigation agencé pour déterminer des informations spatiales à partir, d'une part, de mesures inertielles (Mi) provenant d'un circuit de traitement (100) des signaux de l'unité de mesure inertielle (I) et, d'autre part, de mesures de pseudo-distance (Mpd) provenant du récepteur (200) de signaux satellitaires de positionnement, le circuit de traitement (100) des signaux ayant une entrée de calibration ajustable sur une valeur d'auto-calibration (VCal) afin de réduire l'influence d'une erreur de l'unité de mesure inertielle (I) sur les informations spatiales (p(xr, yr, zr), v, a(θxr, θyr, θzr), PL) fournies par l'algorithme de navigation, **caractérisé en ce que** l'algorithme de navigation met en œuvre un jeu de filtres (400) qui sont des filtres de Kalman-Schmidt et **en ce que** l'unité informatique de traitement (1) est agencée pour mettre en oeuvre le procédé selon l'une quelconque des revendications précédentes.

## Patentansprüche

1. Verfahren zur Navigation eines Fahrzeugs (A) mittels eines Navigationsalgorithmus, der ausgebildet ist, räumliche Informationen (p(xr, yr, zr), v, a(θxr, θyr, θzr), PL) anhand einerseits von inertialen Messungen (Mi), die aus einer Verarbeitungsschaltung (100) zur Verarbeitung der Signale einer inertialen Messeinheit (I) stammen, und andererseits von Pseudo-Distanz-Messungen (Mpd) zu bestimmen, die anhand des Empfangs von Positionssatellitensignalen bestimmt werden, wobei die Verarbeitungsschaltung (100) zur Verarbeitung der Signale einen Kalibrierungseingang hat, der auf einen Autokalibrierungswert (VCal) einstellbar ist, um den Einfluss eines Fehlers der inertialen Messeinheit (I) auf die räumlichen Informationen (p(xr, yr, zr), v, a(θxr, θyr, θzr), PL) zu verringern, die von dem Navigationsalgorithmus geliefert werden, **dadurch gekennzeichnet, dass** der Navigationsalgorithmus mindestens einen Satz von Filtern (400) implementiert, die Kalman-Schmidt-Filter sind, wobei der Satz ausgebildet ist, fehlerhafte Messungen unter den Messungen, die zum Satz von Filtern (400) übertragen werden, zu erfassen und sie von der Bestimmung der räumlichen Informationen (p(xr, yr, zr), v, a(θxr, θyr, θzr), PL) auszuschließen, und dass das Verfahren die Schritte umfasst:
- beim Zurücklegen einer Strecke:
. Übertragen der inertialen Messungen (Mi) und der Pseudo-Distanz-Messungen (Mpd) an mindestens ein hybrides Navigationsfilter (500), das ein Kalman-Filter ist, das parametrisiert ist, um mindestens einen Schätzwert (E) mindestens eines Fehlerterms, der sich auf die inertiale Messeinheit (I) auswirkt, und eine Kovarianz (Cov) zu liefern, die mit dem genannten Schätzwert (E) verbunden ist;
. Übertragen jedes Schätzwerts (E) und der damit verbundenen Kovarianz (Cov) an einen Konsolidierungsalgorithmus (600), der programmiert ist, um die Kovarianz (Cov) mit einem ersten Kovarianzschwellenwert (s1) zu vergleichen und den Schätzwert (E) zu speichern, wenn die Kovarianz (Cov) niedriger als der erste Kovarianzschwellenwert (s1) ist;
. Speichern mindestens eines Parameters, der repräsentativ für eine Nutzungsbedingung des Fahrzeugs (A) ist;
- nach Zurücklegen der Strecke:
. Verifizieren durch den Konsolidierungsalgorithmus (600), dass die Nutzungsbedingung nominal ist, und gegebenenfalls Aktualisieren des Autokalibrierungswerts (VCal) mittels des Schätzwerts (E) des Fehlers der inertialen Messeinheit (I);
. Kalibrieren der inertialen Messeinheit (I) unter Verwendung des aktualisierten Autokalibrierungswerts (VCal).

2. Verfahren nach Anspruch 1, bei dem die Messungen, die als fehlerhaft identifiziert wurden, aus den Messungen ausgeschlossen werden, die von dem hybriden Navigationsfilter (500) verwendet werden.

3. Verfahren nach Anspruch 1 oder Anspruch 2, bei dem nur ein Teil des Schätzwerts (E) zum Aktualisieren des Autokalibrierungswerts (VCal) verwendet wird.

4. Verfahren nach Anspruch 3, bei dem ungefähr ein Zwanzigstel des Schätzwerts (E) zum Aktualisieren des Autokalibrierungswerts (VCal) verwendet wird.

5. Verfahren nach einem der vorhergehenden Ansprüche, bei dem, wenn der Schätzwert (E) des Fehlers größer als ein erster Fehlerschwellenwert ist, der Schätzwert (E) des Fehlers durch den ersten Fehlerschwellenwert ersetzt wird, um den Autokalibrierungswert (VCal) zu aktualisieren.

6. Verfahren nach Anspruch 5, bei dem, wenn der Schätzwert (E) des Fehlers größer als ein zweiter Fehlerschwellenwert ist, der größer als der erste Fehlerschwellenwert ist, der Schätzwert (E) des Fehlers nicht zum Aktualisieren des Autokalibrierungswerts (VCal) verwendet wird.

7. Verfahren nach einem der vorhergehenden Ansprüche, bei dem das Fahrzeug (A) ein Luftfahrzeug ist und die räumlichen Informationen (p(xr, yr, zr), v, a(θxr, θyr, θzr), PL) Informationen zur Position, Geschwindigkeit, Fluglage und Schutzgrenze umfassen.

8. Verfahren nach Anspruch 7, bei dem die Pseudo-Distanz-Messungen (Mpd) nur an das hybride Navigationsfilter (500) übertragen werden, wenn die Geschwindigkeit des Fahrzeugs (A) höher als ein vorbestimmter Geschwindigkeitsschwellenwert (s4) ist.

9. Verfahren nach einem der Ansprüche 7 und 8, bei dem eine Information über den Atmosphärendruck ebenfalls an den Satz von Filtern (400) und an das hybride Navigationsfilter (500) übertragen wird.

10. Verfahren nach einem der vorhergehenden Ansprüche, bei dem die Nutzungsbedingung durch mindestens einen der folgenden Parameter dargestellt wird: eine Reisezeit, ein Auftreten einer Panne, eine Verfügbarkeit von Satellitensignalen, eine Geschwindigkeit, eine Temperatur.

11. Vorrichtung zur Navigation für ein Fahrzeug (A), umfassend eine inertiale Messeinheit (I) und einen Empfänger (200) für Positionssatellitensignale, die beide mit einer Verarbeitungsinformationseinheit (1) verbunden sind, die einen Navigationsalgorithmus einsetzen, der ausgebildet ist, räumliche Informationen anhand einerseits inertialer Messungen (Mi), die aus einer Verarbeitungsschaltung (100) zur Verarbeitung der Signale der inertialen Messeinheit (I) stammen, und andererseits Pseudo-Distanz-Messungen (Mpd), die aus dem Empfänger (200) für Positionssatellitensignale stammen, zu bestimmen, wobei die Verarbeitungsschaltung (100) zur Verarbeitung der Signale einen Kalibrierungseingang hat, der auf einen Autokalibrierungswert (VCal) einstellbar ist, um den Einfluss eines Fehlers der inertialen Messeinheit (I) auf die räumlichen Informationen (p(xr, yr, zr), v, a(θxr, θyr, θzr), PL) zu reduzieren, die von dem Navigationsalgorithmus geliefert werden, **dadurch gekennzeichnet, dass** der Navigationsalgorithmus einen Satz von Filtern (400) implementiert, die Kalman-Schmidt-Filter sind, und dass die Verarbeitungsinformationseinheit (1) ausgebildet ist, das Verfahren nach einem der vorhergehenden Ansprüche durchzuführen.

## Claims

1. A method of navigating a vehicle (A) by means of a navigation algorithm arranged to determine spatial information (p(xr, yr, zr), v, a(θxr, θyr, θzr), PL) on the basis firstly of inertial measurements (Mi) coming from a signal processor circuit (100) for processing the signals from an inertial measurement unit (I) and secondly of pseudo-distance measurements (Mpd) determined in response to receiving signals from positioning satellites, the signal processor circuit (100) having a calibration input adjustable on a self-calibration value (VCal) in order to reduce the influence of an error of the inertial measurement unit (I) on the spatial information (p(xr, yr, zr), v, a(θxr, θyr, θzr), PL) supplied by the navigation algorithm, the navigation algorithm being **characterized in that** it implements at least one set of filters (400) that are Kalman-Schmidt filters arranged to detect faulty measurements among the measurements that are transmitted to the set of filters (400) and to prevent them from being used in determining the spatial information (p(xr, yr, zr), v, a(θxr, θyr, θzr), PL), and **in that** it comprises the steps of:
· when a journey is completed:
· transmitting the inertial measurements (Mi) and the pseudo-distance measurements (Mpd) to at least one hybrid navigation filter (500) that is a Kalman filter that is set to supply at least one estimate (E) of at least one error term affecting the inertial measurement unit (I) and of covariance (Cov) associated with said estimate (E);
· transmitting each estimate (E) and the associated covariance (Cov) to a consolidation algorithm (600) programmed to compare the covariance with a first covariance threshold (s1) and to store the estimate (E) if the covariance (Cov) is less than the first covariance threshold (s1); and
· storing at least one parameter representative of a utilization condition of the aircraft (A); and
· after the journey has been completed:
· using the consolidation algorithm (600) to verify that the utilization condition is nominal, and where appropriate, updating the self-calibration value (VCal) by means of the estimate (E) of the error of the inertial measurement unit (I); and
· calibrating the inertial measurement unit (I) by using the updated self-calibration value (VCal).

2. A method according to claim 1, wherein the measurements that are identified as faulty are excluded from the measurements used by the hybrid navigation filter (500).

3. A method according to claim 1 or claim 2, wherein only a fraction of the estimate (E) is used to update the self-calibration value (VCal).

4. A method according to claim 3, wherein only one twentieth of the estimate (E) is used to update the self-calibration value (VCal).

5. A method according to any preceding claim, wherein if the estimate (E) of the error is greater than a first error threshold, then the estimate (E) of the error is replaced by the value of the first error threshold for updating the self-calibration value (VCal).

6. A method according to claim 5, wherein if the estimate (E) of the error is greater than a second error threshold that is greater than the first error threshold, then the estimate (E) of the error is not used for updating the self-calibration value (VCal).

7. A method according to any preceding claim, wherein the vehicle (A) is an aircraft, and the spatial information (p(xr, yr, zr), v, a(θxr, θyr, θzr), PL) comprises position, speed, attitude, and protection limit information.

8. A method according to claim 7, wherein the pseudo-distance measurements (Mpd) are transmitted to the hybrid navigation filter (500) only if the speed of the vehicle (A) is greater than a predetermined speed threshold (s4).

9. A method according to claim 7 or claim 8, wherein atmospheric pressure information is also transmitted to the set of filters (400) and to the hybrid navigation filter (500).

10. A method according to any preceding claim, wherein the utilization condition is represented by at least one of the following parameters: journey time, the occurrence of a breakdown, unavailability of the satellite signals, speed, temperature.

11. A navigation device for a vehicle (A), the device comprising an inertial measurement unit (I) and a receiver (200) of signals from positioning satellites, both connected to a computer processor unit (1) implementing a navigation algorithm arranged to determine spatial information firstly from inertial measurements (Mi) coming from a signal processor circuit (100) for processing the signals from the inertial measurement unit (I) and secondly from pseudo-distance measurements (Mpd) coming from the receiver (200) of signals from positioning satellites, the signal processor circuit (100) having a calibration input that is adjustable on a self-calibration value (VCal) in order to reduce the influence of an error of the inertial measurement unit (I) on the spatial information (p(xr, yr, zr), v, a(θxr, θyr, θzr), PL) supplied by the navigation algorithm, the navigation algorithm being **characterized in that** it makes use of a set of filters (400) that are Kalman-Schmidt filters and **in that** the computer processor unit (1) is arranged to perform the method according to any preceding claim.
